# EUROPEAN PATENT APPLICATION

(11) **EP 1 216 927 A1**
(43) Date of publication of application: **26.06.2002**
(21) Application number: 00311027.7
(22) Date of filing: 11.12.2000
(51) Int. Cl.: B65D 5/74

(54) **Carton pouring closure**

(71) Applicant: Crown Cork & Seal Technologies Corporation, Alsip, IL 60482 (US)
(72) Inventor: The designation of the inventor has not yet been filed
(74) Representative: Smith, Debra Jane Clare

(57) **Abstract**

A closure (1) for a container such as a carton (2), having a planar base (3) and a planar lid (4) hinged thereto, such that when the lid is in its closed position, cartons with the closure attached can be stacked. The base defines a dispensing orifice (5) and a pouring lip (6) and is fixed to the container surrounding a similar dispensing orifice in the container. The closure is adapted to be welded to the container and has a welding zone (7), which surrounds the dispensing orifice in the base but lies inside the periphery of the pouring lip, such that the closure can be welded to the container with the pouring lip aligned with the edge of the container.

## Description

The present invention relates to a closure for a container such as a carton, commonly used to hold liquid, food products, such as fruit juice, milk etc. The closure according to the invention is particularly suitable for cartons having planar ends and is designed to be welded to the container rather than being fixed thereto using adhesives. The closure is flat and substantially planar, allowing cartons, with the closure affixed thereto, to be stacked conveniently.

Such substantially planar closures are well known in the prior art. Conventionally, such closures have a base with an orifice therein and a conveniently located pouring lip for directing the fluid flow from the container. The carton is also provided with a pouring orifice, normally sealed with foil, which can be torn away before first use of the carton. The closure base is attached to the carton surrounding the foil sealed orifice and is arranged such that the foil can be torn away through the closure orifice, allowing the carton contents to be dispensed. Normally such carton closures also comprise a lid hinged to the base and arranged to snap engage around the pouring lip when the lid is in its closed position.

On first use, a consumer opens the lid, tears away the foil, revealing the dispensing aperture and dispenses the contents of the carton, using the pouring lip to guide the fluid flow. Thus, the foil acts both to seal the dispensing aperture and also acts as a tamper evidence indicator.

However, there are a number of disadvantages associated with this type of closure. The closure is usually fixed to the container around the foil sealed dispensing orifice using adhesives. Over time, these adhesives can degrade and the closure may become partially detached from the container resulting in spills, after the foil is removed. Furthermore, sometimes the closure is misaligned relative to the carton and the pull-tab on the foil is trapped between the closure and the carton, such that the foil cannot be torn away from the dispensing aperture. Furthermore, a user can only determine whether the foil has been torn away by opening the closure cover. Therefore, the tamper evidence feature of the foil can only be inspected when the closure cover is open. Finally, when the closure cover is re-closed after use, the snap engagement between the lid and the pouring lip is insufficient to provide an adequate seal, which results in more rapid deterioration of the product and may also lead to leaks from the closure.

The aim of the invention is to overcome these problems by providing a closure which can be fixed to a container more reliably, using conventional welding techniques, such as ultrasonic welding or heat sealing. The disadvantage of such techniques is that they require a suitable area of overlapping material, to provide a reasonable weld. Thus, the use of such techniques has been limited to welding closures to containers where the closure base comprises a pour spout in the form of a chimney, surrounded by a flange, which can be welded to the container. The disadvantage of this arrangement is that the pouring spout projects from the surface of the carton making it unsuitable for planar end cartons, which need to be capable of being stacked. Furthermore, if this technique is applied to a planar closure having a pouring lip, the provision of a welding flange means that the pouring lip cannot be aligned with the edge of the carton, resulting in unsatisfactory pouring performance.

Accordingly, the present invention provides a closure for a carton, comprising a base defining a dispensing orifice and a pouring lip, and a lid hinged to the base and adapted to cover the pouring lip when the lid is in its closed position, characterised in that, the base further defines a welding zone surrounding the dispensing orifice but inside the periphery of the pouring lip, thereby allowing the closure to be welded to the carton, with the pouring lip aligned with the edge of the carton.

The closure according to the invention is arranged such that it has an orifice for dispensing the contents of the carton, a pouring lip for directing the flow of fluid from the carton and between the two, a zone of material, which allows the closure to be welded to the carton using, for example ultrasonic welding or heat sealing. The welding zone extends around the dispensing orifice, providing a sealed flow path through the dispensing orifice and therefore preventing leaks between the carton and the closure. Advantageously, the closure is moulded with the lid in its open position and the closure is welded to the carton with the lid still in this position, exposing the welding zone on the base of the closure. Subsequently, the lid is closed against the base, forming a flat closure with a low profile and thereby allowing the filled cartons to be stacked easily.

Unlike the conventional rectangular carton closures of this type, the closure according to the invention is preferably substantially square and the pouring lip extends around two adjacent sides of the square. The closure is fixed to the carton at a corner, with the pouring lip aligned with the adjacent edges of the carton. Thus, pouring is effected from the corner of the carton and the corner is used to assist the direction of the fluid flow from the container.

Preferably, the lid and the orifice in the base have complimentary formations, which together form a bore seal when the lid is in its closed position. This arrangement allows the closure to be re-sealed, even after first opening, improving the life of the product on the carton and preventing spills.

Advantageously, the closure also has a tamper-evident feature, to indicate whether the lid of the closure has been opened. Preferably, the base or the lid has a tab connected to the remainder to the lid or base by a frangible connection (for example, thin frangible bridges). When the lid is closed on the filling line, the tab is locked in this closed position by a tooth on the complimentary part of the lid or base. The frangible connection is arranged such that any attempt to open the lid of the closure will break the connection, providing visible tamper-evidence, indicating that the closure has already been opened. The tab may be arranged such that it is completely detached on first opening or preferably it may be arranged such that it remains connected to the base or lid by a non-frangible portion. Preferably, on opening of the lid for the first time, this non-frangible portion is irreversibly deformed, such that the tab cannot be rebuilt in its original state in a visibly unobtrusive manner.

The invention will now be described by, way of example only, with reference to the accompanying drawings, in which:

FIGURE 1 shows an isometric view of the closure shown in figure 1, with the lid in its open position (as moulded).

FIGURE 2 shows an isometric view of the closure shown in figure 1, with the lid in its open position (after first opening).

FIGURE 3 shows a plan view of the closure shown in figure 1.

FIGURE 4 shows a side section through the closure shown in Figure 1, with the lid in its closed position.

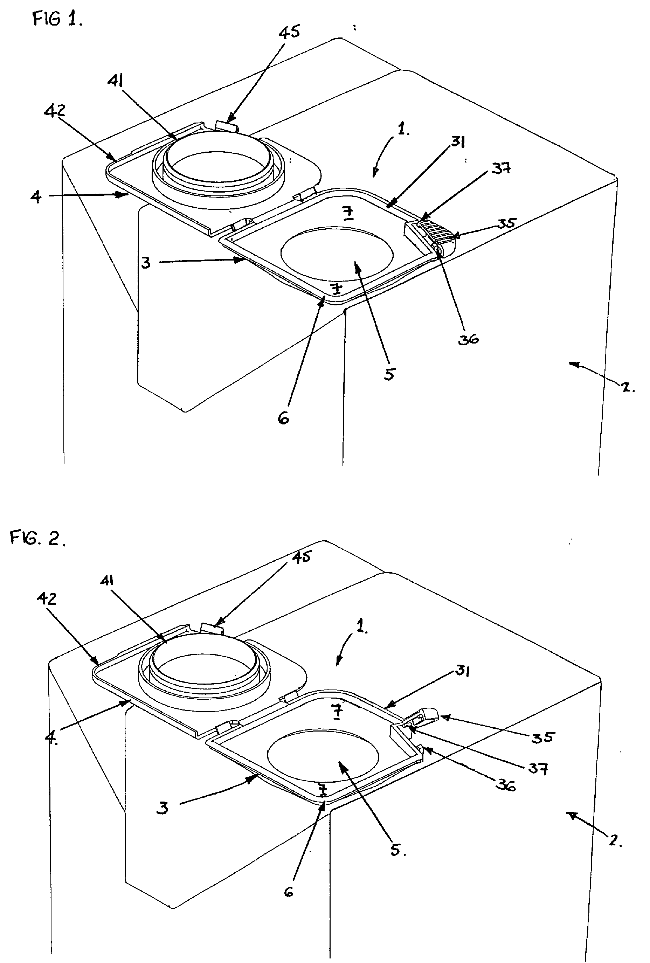

Referring to figures 1 to 3, showing a closure 1 according to the invention fixed to a carton 2. The closure 1 comprises a base 3 and a lid 4, hinged to the base 3 and moveable between a closed position and an open position (see Figure 2). The base 3 is substantially square and defines a dispensing orifice 5 and a pouring lip 6, which extends around two adjacent sides of the square, allowing the contents of the container to be poured from the corner of the carton 2. A welding zone 7 is defined surrounding the orifice 5 inside the periphery of the pouring lip 6. The welding zone 7 is a substantially flat zone of material, which can be used to weld the closure 1 to the carton 2 using ultrasonic welding, heat sealing or similar methods. Provision of a welding zone 7 inside the periphery of the pouring lip 6, allows the closure 1 to be arranged on the carton 2, with the pouring lip 6 aligned with the edge or edges of the carton 2 (as shown in figures 1 and 2). This improves the quality of pour from the carton 2 and there is less chance of the product wetting the surface of the carton 2.

Referring to figures 1 and 2, a chimney 41 extends from the underside of the lid and is adapted to engage with the orifice 5 in the base 3 to form a bore seal. The lid 4 also has an edge 42, which is designed to snap over the pouring lip 6. The base 3 has a peripheral wall 31 extending around its periphery to contain any spills within the closure 1. On two sides of the base 3, the peripheral wall 31 is adapted to define the pouring lip 6.

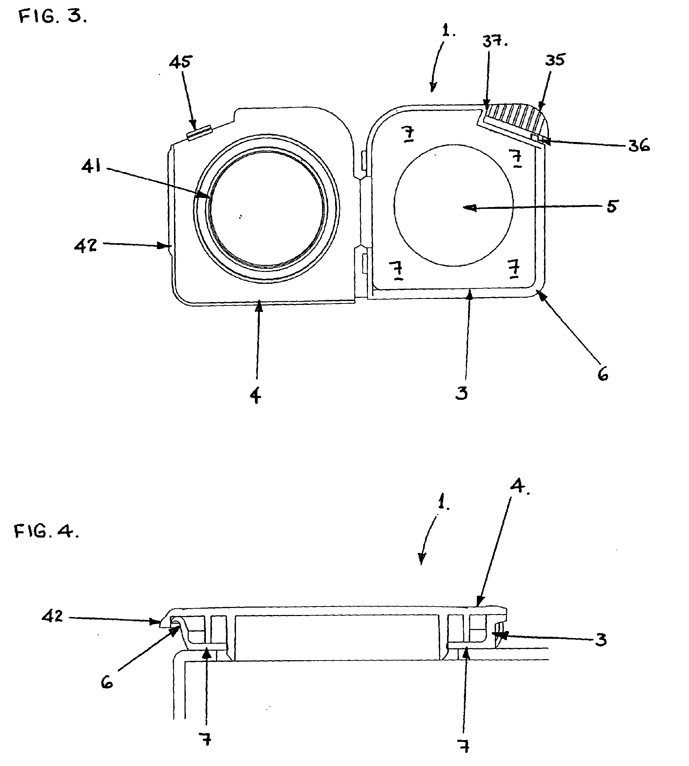

Referring to figures 3 and 4, it can be seen that the welding zone 7 extends all the way around the orifice 5 so that when the closure 1 is welded to the container 2 at the welding zone 7, a sealed fluid pathway is defined from the inside of the carton 2 to the pouring lip 6 on the closure 1 and there is no pathway where leaks can penetrate between the opposed surfaces of the closure 1 and carton 2.

Finally, as shown in figures 1 to 3, the closure 1 is also provided with a tamper evidence feature to visibly indicate when the lid 4 has been opened. A tab 35 is integrally moulded with the base 3. The tab 35 is connected to the base 3 at two points: A frangible connection 36 and a non-frangible, deformable connection 37. A tooth 45 is provided on the lid 4 in a suitable position to engage with the tab 35. When the lid 4 is closed for the first time, the tooth 45 locks under the tab 35 and the lid 4 cannot be opened thereafter, without breaking the frangible connection 36. On first opening, as the lid is pivoted upwards to its open position, the tooth 45 (which is engaged under the tab 35) pulls the tab 35 upwards, thereby breaking the frangible connection 36. This upward movement also deforms the non-frangible connection 37 (see figure 2). Therefore, after first opening, the raised tab 35 provides a visible indication that the container has been opened, even after the lid 4 has subsequently been re-closed. Should a tamperer try to reinstate the tab in its original condition, the non-frangible connection 37 will have permanently deformed and will still give a visible indication that the closure 1 has been opened. Even if the non-frangible connection 37 can be pushed back to its original lowered position, the deformation will result in whitening of the material around the connection 37.

It will be readily apparent that many other closure configurations are possible within the scope of the present invention and the closure shown in the drawings is merely one example of such a closure.

## Claims

1. A closure for a carton, comprising
a base defining a dispensing orifice and a pouring lip, and
a lid hinged to the base and adapted to cover the pouring lip when the lid is in its closed position,
**characterised in that**,
the base further defines a welding zone surrounding the dispensing orifice but inside the periphery of the pouring lip,
thereby allowing the closure to be welded to the carton, with the pouring lip aligned with the edge of the carton.

2. A closure according to claim 1, wherein the base is substantially square and the pouring lip is defined along two adjacent edges of the square.

3. A closure according to claim 1 or claim 2, wherein the lid and the base surrounding the orifice have complimentary formation, adapted to engage and form a fluid tight bore seal when the lid is in its closed position.

4. A closure according to any one of the preceding claims, wherein the closure further comprises a tab connected to the base or the lid by a frangible connection and held fixed in relation to the other one of the lid or the base by a tooth, such that on first opening of the lid, the frangible connection is broken, providing visible tamper evidence.

5. A closure according to claim 4, wherein the tab is also connected to the base or the lid at another place by a non-frangible connection, which is deformed on first opening of the lid, such that the tab cannot be reconstructed in its original configuration.

6. A closure according to any one of the preceding claims, wherein the closure is adapted to be welded to the container with the lid in its open position.
